# EUROPEAN PATENT APPLICATION

(11) **EP 4 033 455 A1**
(43) Date of publication of application: **27.07.2022**
(21) Application number: 21190047.7
(22) Date of filing: 06.08.2021
(51) Int. Cl.: G06V 20/00, G06K 9/62

(54) **INFORMATION PROCESSING DEVICE, INFORMATION PROCESSING PROGRAM AND INFORMATION PROCESSING METHOD**

(30) Priority: 22.01.2021 JP 2021009011
(71) Applicant: Fujifilm Business Innovation Corp., Tokyo (JP)
(72) Inventor: MASUNAGA, Shohei, Yokohama-shi (JP); MOTOSUGI, Yukari, Yokohama-shi (JP); ZHONG, Zhihua, Yokohama-shi (JP); FUJII, Koichi, Yokohama-shi (JP)
(74) Representative: Haseltine Lake Kempner LLP

(57) **Abstract**

An information processing device includes a processor, and the processor is configured to collate images of plural positions on a surface of an object to be inspected with images of plural positions, which corresponds to the plural positions on the surface of the object to be inspected, on a surface of at least one reference object that is a reference, and present the number of successful collations among the plural positions and identification information on a reference object that matches the object to be inspected in a position where the collation is successful.

## Description

### Background

### 1. Technical Field

The present disclosure relates to an information processing device, an information processing program and an information processing method.

### 2. Related Art

JP-A-2014-29678 discloses a system that determines authenticity of a product by collating a random pattern in a preset area on a surface of the product. The system includes: a memory that stores a feature amount of a random pattern in an area of a genuine product in a reference state of a mark having a preset positional relationship with the area; an image acquisition unit that acquires a captured image including a mark and an area of a target product; an image processing unit that acquires a parameter for converting the mark in the captured image to be identical to the mark in the reference state and corrects, by the parameter, the area in the captured image to an image showing the area when the mark is in the reference state; an extraction unit that extracts a feature amount from the image of the corrected area obtained by the image processing unit; a comparison processing unit that calculates a degree of similarity by comparing the feature amount of the target product obtained by the extraction unit with the feature amount of the genuine product stored in the memory; and a determination unit that determines whether the degree of similarity exceeds a predetermined threshold value.

### Summary

There is a technique in which plural positions on a surface of an object to be inspected such as a product are captured and registered in advance as information unique to the object, and a registered image registered in advance is compared with a captured image obtained by capturing the same position on the surface of the object to be inspected, thereby determining authenticity of the object to be inspected.

In the authenticity determination of the object to be inspected, the identification accuracy of a corresponding position may be lowered due to a surface change due to external disturbance such as adhesion of dust, external stress, or environmental changes at the time of capturing an image of the object to be inspected. In a case where there is an abnormal value in a part of plural collated positions due to a decrease in identification accuracy or the like, even a genuine product may be determined as a counterfeit when it is immediately determined that the collation fails as the whole object to be inspected.

An object of the present disclosure is to provide an information processing device, an information processing program and an information processing method that can present information for confirming authenticity of an object to be inspected even when there is an abnormal value in a position thereof.

According to an aspect of the present disclosure, there is provided, as a first aspect of the invention, an information processing device including a processor, wherein the processor is configured to collate images of plural positions on a surface of an object to be inspected with images of plural positions, which corresponds to the plural positions on the surface of the object to be inspected, on a surface of at least one reference object that is a reference, and present the number of successful collations among the plural positions and identification information on a reference object that matches the object to be inspected in a position where the collation is successful.

According to a second aspect, in the information processing device according to the first aspect, the processor is configured to present, in addition to the identification information, an index indicating a degree of matching between the object to be inspected and the reference obj ect.

According to a third aspect, in the information processing device according to the second aspect, the processor is configured to present the identification information arranged in order of magnitude of the index when plural pieces of the identification information are presented.

According to a fourth aspect, in the information processing device according to any one of the first to third aspects, the plural positions are classified by locations of the object to be inspected, and the processor is configured to determine, using a threshold value set for each of the locations, success of collation with the reference object in a position classified into the each of the locations.

According to a fifth aspect, in the information processing device according to any one of the first to third aspects, the plural positions are classified by locations of the object to be inspected, and the processor is configured to determine, when two or more positions of the plural positions are classified into one location of the locations and the reference object that matches the object to be inspected is different in the two or more positions classified into the one location, the reference object that matches the object to be inspected at the one location by giving priority to one of the two or more positions.

According to a sixth aspect, in the information processing device according to any one of the first to fifth aspects, images of two or more positions of the plural positions on the surface of the reference object are arranged within a visual field range of a capturing unit when the reference object is captured, and the two or more positions are arranged in an area that is inside the visual field range and is narrower than the visual field range.

According to a seventh aspect, in the information processing device according to the sixth aspect, two positions farthest from each other among the two or more positions arranged in the narrower area are arranged along an outer edge of the narrower area with a center of the narrower area interposed between the two positions.

According to an aspect of the present disclosure, there is provided, as an eighth aspect of the invention, an information processing program that causes a computer to function as the information processing device according to any one of the first to seventh aspects.

According to an aspect of the present disclosure, there is provided, as a ninth aspect of the invention, an information processing method including: collating images of plural positions on a surface of an object to be inspected with images of plural positions, which correspond to the plural positions on the surface of the object to be inspected, on a surface of at least one reference object that is a reference, and presenting a number of successful collations among the plural positions and identification information on the reference object that matches the object to be inspected in a position where the collation is successful.

According to the first, the eighth and the ninth aspects, the number of successful collations and identification information on the reference object that matches the object to be inspected in a position in which the collation is successful can be presented as information for confirming authenticity of the object to be inspected. As a result, it is possible to provide an information processing device, an information processing program and an information processing method having high practicality as compared with a case where collation fails immediately when there is an abnormal value in a part.

According to the second aspect, by presenting the index indicating the degree of matching with the reference object, it is possible to infer the certainty of the collation result of the identification information, and the comprehensive individual identification can be executed more stably.

According to the third aspect, when plural pieces of identification information are presented, it is possible to know the order of the certainty of the identification information by presenting the identification information arranged in order of the magnitude of the index indicating the degree of matching.

According to the fourth aspect, by using the threshold value set for each location, it is possible to change the threshold value depending on the location, and it is possible to give priority depending on the location.

According to the fifth aspect, it is possible to prioritize one of the two or more positions.

According to the sixth aspect, the two or more positions are arranged inside the visual field range and inside an area narrower than the visual field range. As a result, even when a certain degree of deviation occurs due to horizontal deviation, rotation, or the like of the capturing location in the case of observation, it is possible to cope with the deviation and to set the two or more positions described above within the visual field range.

According to the seventh aspect, since the two positions farthest from each other among the two or more positions are arranged along the outer edge of the narrower area with the center of the narrower area interposed therebetween, it is possible to make it difficult for a chorus, dust, or the like to affect both of the two positions as compared with a case where the two positions farthest from each other are arranged inside the outer edge instead of extending along the outer edge.

### Brief Description of the Drawings

Exemplary embodiments of the present invention will be described in detail based on the following figures, wherein:
Fig. 1 shows a schematic configuration example of an information processing device;
Fig. 2 is a block diagram showing a hardware configuration of the information processing device;
Fig. 3 is a schematic diagram showing an example of plural locations in a bottle that is a reference object;
Fig. 4 shows an example of a registration position settable range and registration positions in a visual field range;

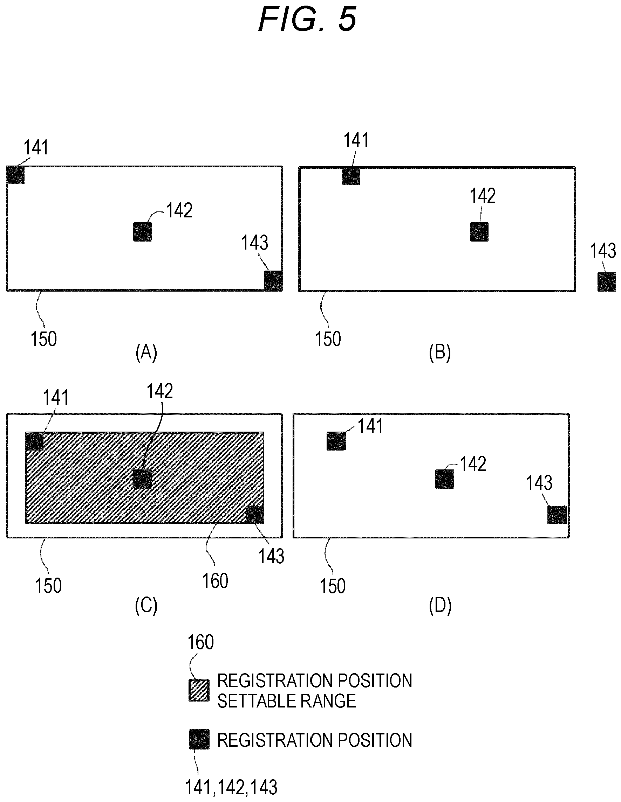

Fig. 5 is a drawing including schematic diagrams of a capturing location, in which (A) and (B) are schematic diagrams when no registration position settable range is provided, in which (A) is a schematic diagram of a capturing location of a reference object and (B) is a schematic diagram of a capturing location where a horizontal deviation occurs in an object to be inspected, and (C) and (D) are schematic diagrams when a registration position settable range is provided, in which (C) is a schematic diagram of a capturing location of the reference object and (D) is a schematic diagram of a capturing location where a horizontal deviation occurs in the object to be inspected;

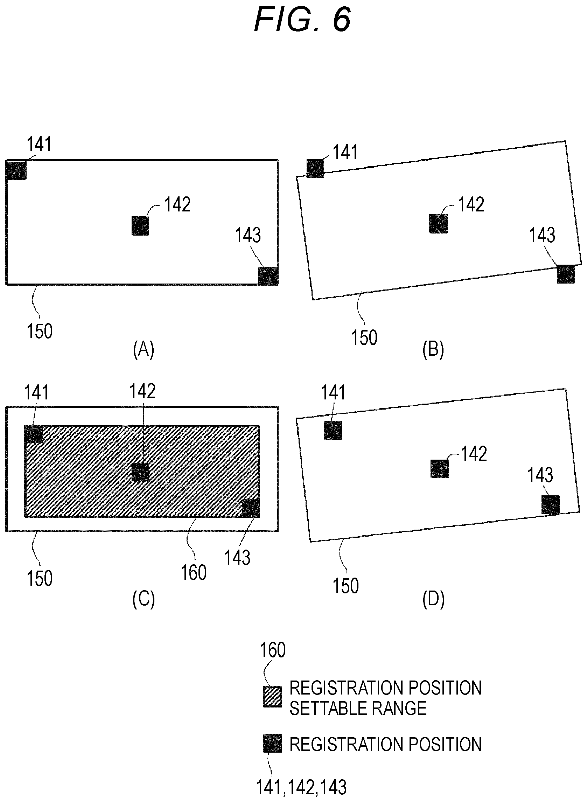

Fig. 6 is a drawing including schematic diagrams of a capturing location, in which (A) and (B) are schematic diagrams when no registration position settable range is provided, in which (A) is a schematic diagram of a capturing location of a reference object and (B) is a schematic diagram of a capturing location where rotation occurs in an object to be inspected, and (C) and (D) are schematic diagrams when a registration position settable range is provided, in which (C) is a schematic diagram of a capturing location of the reference object and (D) is a schematic diagram of a capturing location where rotation occurs in the object to be inspected;
Fig. 7 is a flowchart showing a flow of information processing executed by the information processing device;
Fig. 8 is a flowchart showing a flow of comprehensive determination processing;
Fig. 9 is a flowchart showing a processing flow for selecting a reference object (identification ID) candidate that matches at each capturing location ID;
Fig. 10 is a flowchart showing a processing flow for executing final determination;
Fig. 11 is an example of a screen presented to a user when collation is successful;
Fig. 12 is another example of the screen presented to the user when collation is successful; and
Fig. 13 is still another example of the screen presented to the user when the collation is successful.

### Detailed Description

Hereinafter, an exemplary embodiment of the present disclosure will be described with reference to the drawings. The same components and processing are denoted by the same reference numerals throughout the drawings and redundant descriptions will be omitted.

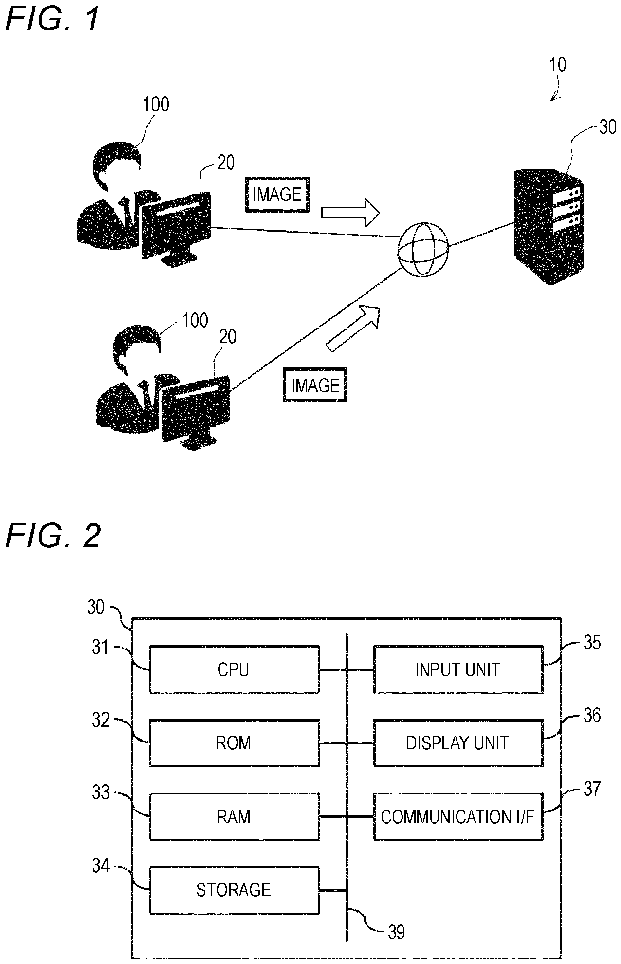

Fig. 1 shows a schematic configuration of an information processing system according to the present exemplary embodiment.

Fig. 1 shows a schematic configuration of an information processing system 10 including an information processing device 30 according to the present exemplary embodiment.

As shown in Fig. 1, the information processing system 10 includes user terminal devices 20 used by users 100 and an information processing device 30 that is a server device. The user terminal devices 20 and the information processing device 30 are connected to a communication unit such as a network. As the communication unit, various wireless or wired networks such as the Internet, Ethernet (registered trademark), and wifi (registered trademark) are applicable as described later. Fig. 1 shows an example in which two users 100, two user terminal devices 20, and one information processing device 30 are provided. Alternatively, the present disclosure is not limited to these numbers.

In the information processing system 10, captured images of plural positions on a surface of an object to be inspected are input to the user terminal devices 20 by the users 100. The information processing device 30 receives a captured image from a user terminal and compares the captured image with a registered image obtained by capturing and registering in advance plural corresponding positions of a reference object that is a reference, thereby determining authenticity of the object to be inspected. In the present exemplary embodiment, the authenticity determination of the object to be inspected is executed at plural locations on the object to be inspected. Each of the plural locations includes plural positions. In Fig. 1, the information processing device 30 is shown as a device different from the user terminal devices 20. However, the information processing device 30 may be implemented by any computer, or may be implemented by any user terminal device 20.

Fig. 2 is a block diagram showing a hardware configuration of the information processing device 30.

As shown in Fig. 2, the information processing device 30 has a function as a computer and includes a central processing unit (CPU: processor) 31 that is an example of a processor, a read only memory (ROM) 32, a random access memory (RAM) 33, a storage 34, an input unit 35 that is a user interface, a display unit 36 that is a liquid crystal display device, and a communication interface (communication I/F) 37. The units of the information processing device 30 are connected to each other via a bus 39 to be communicable with each other.

The CPU 31, which is an example of a processor, is a central processing unit and executes various programs and controls the units. That is, the CPU 31 reads a program from the ROM 32 or the storage 34, and executes the program using the RAM 33 as a work area. The CPU 31 controls the units of the information processing device 30 and executes various types of arithmetic processing in accordance with the program recorded in the ROM 32 or the storage 34.

The ROM 32 stores various programs and various data. The RAM 33 temporarily stores programs or data as a work area. The storage 34 includes a storage device such as a hard disk drive (HDD) or a solid state drive (SSD) and stores various programs including an operating system and various data.

The input unit 35, which is a user interface, is an interface when a server administrator uses the information processing device 30 and is, for example, a button or a touch panel. The display unit 36 has a display screen such as a liquid crystal display.

The communication interface 37 is an interface for communicating with the user terminal devices 20 such as personal computers. As a communication method of the communication interface 37, wired or wireless communication is used. As a communication standard of the communication interface 37, for example, Ethernet (registered trademark), FDDI, Wi-Fi (registered trademark), or the like is used.

When the above-described programs are executed, the information processing device 30 implements various functions using the above-described hardware resources.

In the exemplary embodiment, an information processing program that causes a computer to function as the information processing device 30 described above is stored in the RAM 33 or the storage 34.

The CPU 31 can read the information processing program from the ROM 32 or the storage 34 and execute the program using the RAM 33 as a work area.

Although not particularly shown in Figs. 1 and 2, a user side includes an image capturing device such as a camera that captures an image of the surface of the object to be inspected, a reading device such as a scanner that reads an image captured by the capturing device as data, and the like. The same reading device or the like may be provided on an administrator side including the information processing device 30.

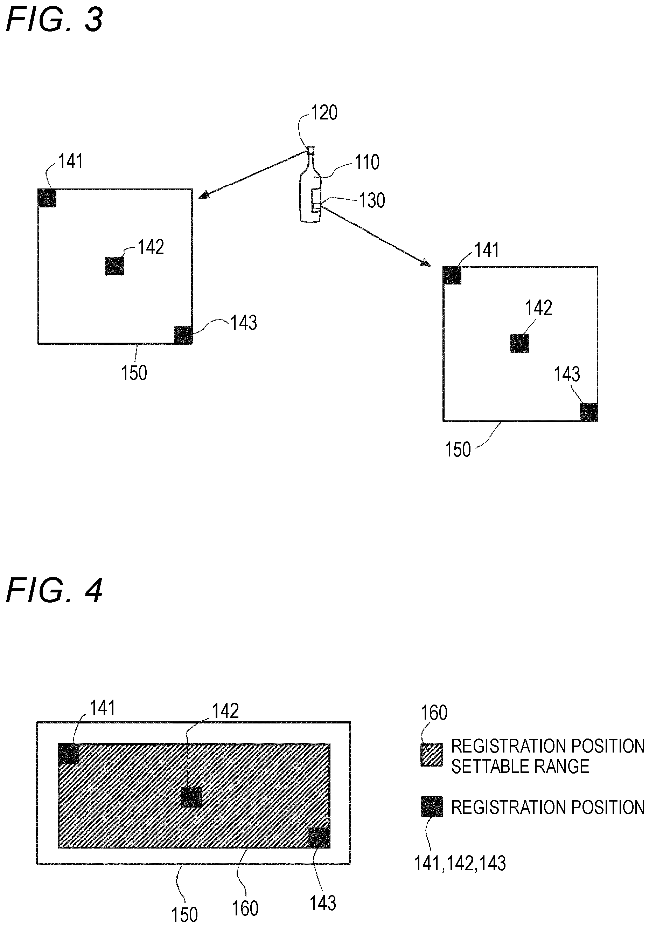

Fig. 3 is a schematic diagram showing an example of plural locations in a bottle that is a reference object.

A bottle 110 will be described as an example of the reference object that is a reference for comparison with the object to be inspected.

In the product bottle 110 that is a reference object, two locations including a lid 120 and a paper label 130 of the product are registered in a set in association with the same identification information.

The identification information is also referred to as an individual ID and is a numerical value, a symbol, a character, or the like that is registered in advance and can specify the product bottle 110, and is given when the bottle 110 is registered.

In the present exemplary embodiment, a capturing location ID is given to each of the two locations including the lid 120 and the label 130. A number is given to each location, for example, the lid 120 is numbered for a capturing location ID (X1) and the label 130 is numbered for a capturing location ID (Y1).

Further, plural registration positions (three positions in this example) registered in advance as images are set in each of the capturing locations. Registration position numbers are also given to the respective positions. For example, in a visual field range 150 that is a captured image of a square frame obtained by capturing an image of a lid, a registration position 141 at an upper left corner of the square frame is set as a registration position number R1, a registration position 142 in the center of the square frame is set as a registration position number R2, and a registration position 143 at a lower right corner of the square frame is set as a registration position number R3. These numbers are given for convenience and the present disclosure is not limited to the above-described numbers.

Here, detailed setting positions of the registration positions 141, 142, and 143 will be described with reference to Figs. 4, 5, and 6.

Fig. 4 shows an example of a registration position settable range and registration positions in a visual field range. Fig. 5 shows a comparison between a case where registration positions are provided in the entire visual field range and a case where a narrower registration position settable range is provided in the visual field range and registration positions are provided in the registration position settable range. Fig. 6 shows a comparison between a case where registration positions are provided in the entire visual field range and a case where a narrower registration position settable range is provided in the visual field range and registration positions are provided in the registration position settable range.

In the present exemplary embodiment, as shown in Fig. 4, all of the plural registration positions 141, 142, and 143 on the surface of the reference object are arranged within a registration position settable range 160 (hatched range in Fig. 4) that is an area located inside the visual field range 150 and is narrower than the visual field range 150.

On the other hand, as shown in (A) of Fig. 5 and (A) of Fig. 6, it is assumed that the registration positions 141 and 143 are provided outside the registration position settable range 160, which is an area inside the above-described visual field range 150 and is narrower than the visual field range 150. In this case, when a visual field range of an image capturing device such as a camera is horizontally shifted when a corresponding location is captured, the registration position 143 does not fall within the visual field range as shown in (B) of Fig. 5. Accordingly, the registration position 143 cannot be used for the authenticity determination. In addition, as shown in (B) of Fig. 6, when the visual field range of the camera is rotated, the registration positions 141 and 143 are also out of the visual field range.

Therefore, in the present exemplary embodiment, as shown in Fig. 4 and (C) of Fig. 5, arrangement positions of the registration positions are determined such that all the registration positions 141, 142, and 143 are included in the registration position settable range 160. For this reason, as shown in (D) of Fig. 5, even when the visual field range 150 of the camera is slightly shifted in the horizontal direction, the registration positions can be contained in the visual field range 150. In addition, as shown in (D) of Fig. 6, even when the visual field range 150 of the camera is slightly rotated, the registration positions can be contained in the visual field range 150.

In the present exemplary embodiment, among the two or more registration positions 141, 142, and 143 arranged in the registration position settable range 160 that is an area narrower than the visual field range 150, the two registration positions 141 and the registration position 143 that are farthest from each other are arranged along an outer edge of the registration position settable range 160 (hatched range in Fig. 4) that is the narrower area described above on a diagonal line of the registration position settable range 160 with the center of the registration position settable range 160 interposed therebetween.

Here, the center is, for example, an intersection of diagonal lines of the rectangular visual field range 150 or an intersection of diagonal lines of the registration position settable range 160. In addition, when the visual field range 150 or the registration position settable range 160 is not rectangular, for example, the center is the center of gravity of the visual field range 150 or the registration position settable range 160.

According to the present exemplary embodiment, the two registration positions 141 and 143 farthest from each other among the plural registration positions 141, 142, and 143 are located along the outer edge of the registration position settable range 160 with the center of the registration position settable range 160 interposed therebetween. Accordingly, a distance between the two registration positions 141 and 143 is ensured and it is easy to avoid a partial surface change due to a chorus, dust, or the like from affecting both of the registration positions 141 and 143.

Images of the registration positions 141, 142, and 143 include, for example, a random pattern that is a unique feature on the surface of the object, or a random pattern generated on the surface of the object by a mold or the like in the process of forming the object even when the surface of the object does not originally include a random pattern. The random pattern means a unique feature on the surface of the object, or a feature on the surface produced (for example, produced by a difference in mold, a difference in temperature, and a difference in material) on the surface of the object by a mold or the like in the process of forming the object. Therefore, products continuously produced at the same time, that is, products of the same lot, have the same feature, whereas products formed in different lots may have different features even when they are formed in the same line. The capturing locations and the registration positions are determined in advance to include such features. The information processing device 30 specifies a lot of the object to be inspected and determines a counterfeit by collating a feature, such as a random pattern included in a position corresponding to a registration position, in a captured image obtained by capturing an image of a capturing location of the object to be inspected with a feature of a genuine product registered in advance.

As a more specific example, a feature unique to an object includes a random pattern having randomness, such as the transparency of the paper of the label 130 of the bottle 110 that changes at random. Such a random pattern is a feature unique to the object that is distributed along the surface of the object, and is useful for authenticity determination (matching determination) of the object. For example, it is impossible to control the degree of entanglement of a fibrous material that forms the paper of the label 130 at the time of manufacturing, and thus the degree of entanglement of the fibrous material that forms the paper can be regarded as random. The degree of entanglement of the fibrous material that forms paper can be observed using transmitted light.

The feature of the object described above is not limited to the random pattern as described above. Similarly, the authenticity determination (matching determination) relative to the reference object can be executed on the object to be inspected even with a featured geometric pattern, a symbol, or unevenness that has regularity.

Even when a special mark, a metal minute sheet mixed in paint, unevenness, or the like is formed in a predetermined position, it is possible to determine authenticity of the object to be inspected and the reference object by the above-described method in the same manner. Further, the determination may be made by plural combinations of the random pattern, the regular pattern, the special mark, the metal minute sheet mixed in paint, and the like as described above.

Next, the operation of the information processing device 30 will be described.

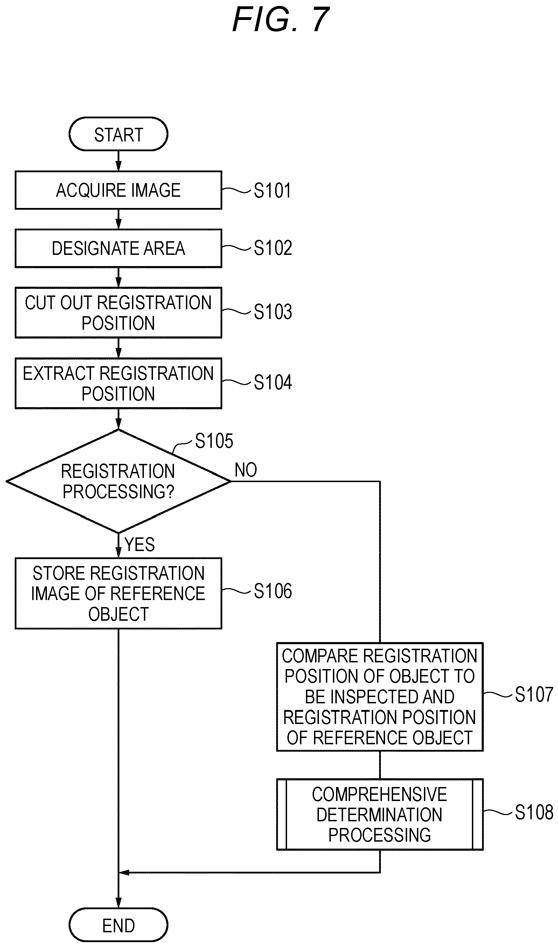

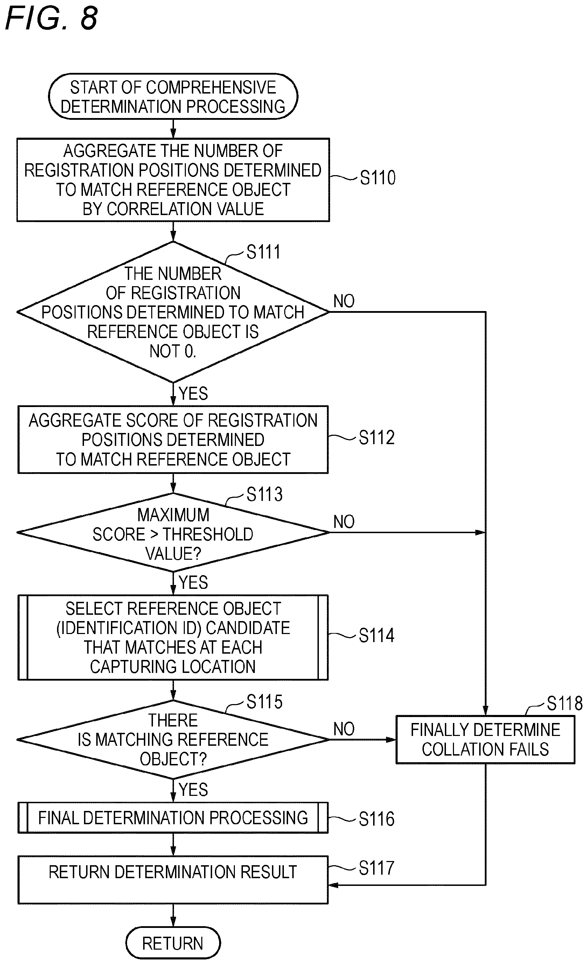

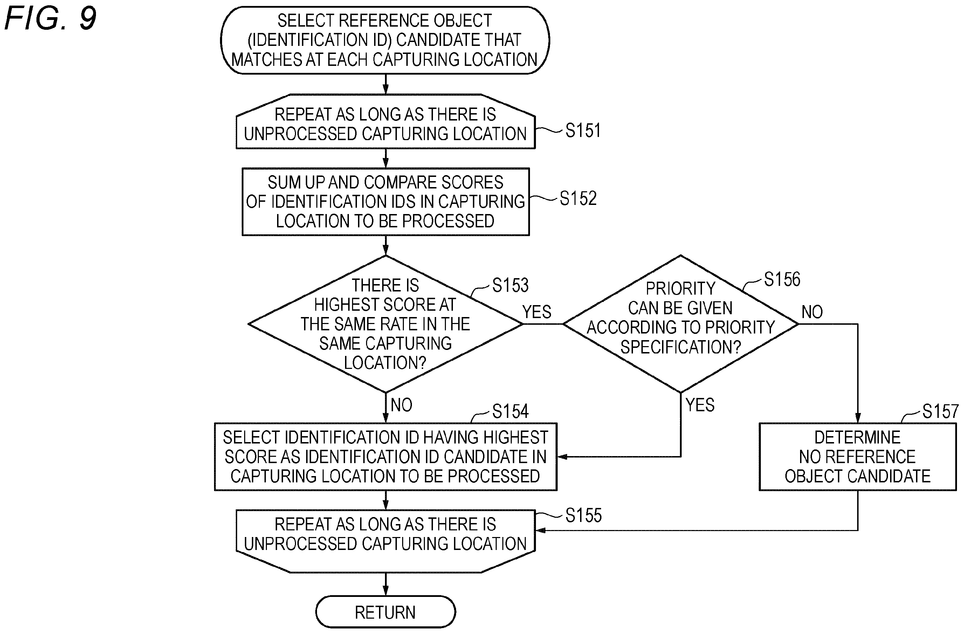

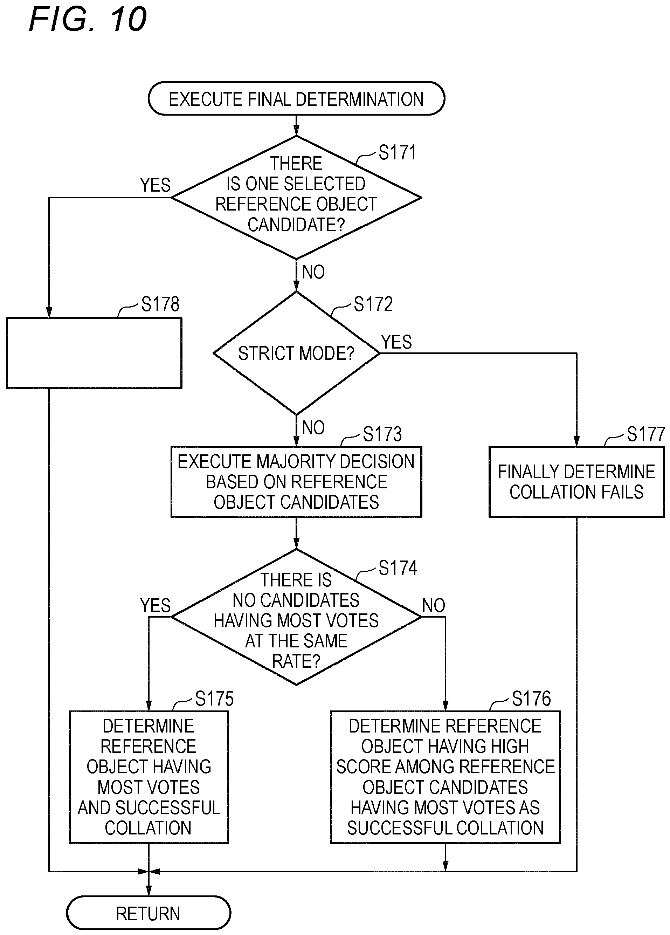

Fig. 7 is a flowchart showing a flow of information processing executed by the information processing device. Fig. 8 is a flowchart showing a flow of comprehensive determination processing in step S108 of Fig. 7. Fig. 9 is a flowchart showing a processing flow for selecting an identification information candidate for each capturing location ID in step S114 of Fig. 8. Fig. 10 is a flowchart showing a processing flow for executing final determination in step S116 of Fig. 8.

In step S101, the CPU 31 acquires an image from the user terminal device 20. At this time, the user 100 designates whether the image is an image of the reference object or an image of the object to be inspected by the user terminal device 20. The designation is transmitted to the information processing device 30 as an attribute or the like of the image. Then, the CPU 31 proceeds to the next step S102.

In step S102, the CPU 31 sets the registration position settable range 160, which is an area narrower than the visual field range 150 as described above, in the acquired image. Then, the CPU 31 proceeds to the next step S103.

In step S103, the CPU 31 executes so-called cutting-out processing of setting the registration positions 141, 142, and 143 within the registration position settable range 160. Then, the CPU 31 proceeds to the next step S104.

In step S104, the CPU 31 executes data extraction processing on the registration positions 141, 142, and 143. Then, the CPU 31 proceeds to the next step S105.

In step S105, the CPU 31 determines whether to execute registration processing on the image. Whether to execute the registration processing is determined based on whether the attribute of the image is the reference object or the object to be inspected. When the attribute of the image is the reference object, the CPU 31 determines to execute the registration processing. When it is determined that the registration processing is to be executed (step S105: YES), the CPU 31 proceeds to step S106. When it is determined that the registration processing is not to be executed (step S105: NO), that is, when the attribute of the image is the object to be inspected, the CPU 31 proceeds to step S107.

In step S106, the CPU 31 stores the image including the registration positions 141, 142, and 143 in the information processing device 30 as the image of the reference object. Then, the processing ends.

In step S107, the CPU 31 executes comparison processing between the registration positions 141, 142, and 143 of the image of the object to be inspected and the registered image of the reference object.

Here, as the reference object, a reference object corresponding to the object to be inspected is selected from among reference objects registered in advance. Specifically, for example, when the object to be inspected is a bottle as described above, a reference object registered as a bottle is selected. There may be plural reference objects to be selected. When there are plural corresponding reference objects, the object to be inspected is compared with all the reference objects. In the following description, it is assumed that there are plural corresponding reference objects.

In addition, as in the above-described bottle, when different locations such as the lid 120 and the label 130 are set in the same object, the comparison processing of the registration positions 141, 142, and 143 of the same capturing location ID is executed.

When corresponding registration positions are compared with each other, for example, when distributions of brightness values of pixels included in images of the corresponding registration positions of the reference object and the object to be inspected are compared with each other, a correlation value using a normalized cross-correlation method or the like in template matching of an image processing technique is calculated. Here, an example of the correlation value is a matching rate of the images of the corresponding registration positions of the reference object and the object to be inspected. By comparing the correlation value with a preset threshold value, the comparison processing of whether the object to be inspected matches the reference object is executed for each registration position. The comparison between the images of the corresponding registration positions of the reference object and the object to be inspected is not limited to the above example, and may be executed by any method. For example, the image of the registration positions of the object to be inspected may be compared with the image of the registration positions of the corresponding reference object by pattern matching.

Then, the CPU 31 proceeds to the next step S108.

In step S108, the CPU 31 executes comprehensive determination processing. Then, the processing ends.

The above-described comprehensive determination processing will be described with reference to the flowchart of Fig. 8.

In step S110, the CPU 31 aggregates the number of registration positions of the object to be inspected determined to match the reference object (identification ID) by the determination based on the correlation value in the above-described comparison processing. Then, the CPU 31 proceeds to the next step S111. It may be determined that plural reference objects match in one registration position, and the number of registration positions that match those of the reference objects is counted as one even in such a case.

In step S111, the CPU 31 determines whether the number of registration positions determined to match those of the reference object (identification ID) as a result of the aggregation is not zero.

When the CPU 31 determines that the number of registration positions that match those of the reference object is not zero (step S111: YES), the CPU 31 proceeds to step S112. When the CPU 31 determines that the number of registration positions that match those of the reference object is zero (step S111: NO), the CPU 31 proceeds to step S118.

In step S112, the CPU 31 aggregates a score of the registration positions of the object to be inspected determined to match the reference object (identification ID). Then, the CPU 31 proceeds to the next step S113.

In the present exemplary embodiment, the "score" is the number of registration positions determined to match those of the reference object, and is given for each capturing location, for example. For example, it is assumed that two of the plural registration positions of the object to be inspected are determined to match those of a reference object A. In this case, a numerical value two is given as the score.

Further, it is assumed that one registration position of the plural registration positions of the object to be inspected is determined to match that of the reference object A, and that the other two registration positions are determined to match those of a reference object B. In this case, in this step, the number of registration positions with the larger number is given as the score. That is, in this example, two, which is the number of registration positions that match those of the reference object B, is given as the score.

The score may not be an integer. For example, when one of the three registration positions 141, 142, and 143 included in one capturing location matches a corresponding registration position of one reference object, the score may be set to 1/3.

In step S113, the CPU 31 determines whether the score of the capturing location having the highest score among the plural capturing locations is greater than a threshold value. When the CPU 31 determines that the highest score is greater than the threshold value (step S113: YES), the CPU 31 proceeds to step S114. When the CPU 31 determines that the highest score is equal to or less than the threshold value (step S113: NO), the CPU 31 proceeds to step S118. The threshold value is, for example, 0. When the threshold value is set to 0, the number of registration positions determined to match in step S111 is not 0, and thus the CPU 31 does not proceed to step S118 in principle. The larger the threshold value is, the more strictly the matching is determined.

In the present exemplary embodiment, as described above, the capturing location ID (for example, the capturing location ID (X1) is given to the lid 120 and the capturing location ID (Y1) is given to the label 130) is given for each different location between the lid 120 and the label 130. A different threshold value such as threshold values "0", "1", and "2" may be set for each capturing location ID, that is, for each of the lid 120 and the label 130. That is, it may be determined whether a position classified into a location matches that of the reference object, that is, whether the collation with the reference object is successful, by using a threshold value set for each capturing location ID. In this way, by using the threshold value set for each capturing location ID, it is possible to change the threshold value depending on the location and to give priority depending on the location.

In step S114, the CPU 31 specifies, for each capturing location ID, which reference object matches, and selects the specified reference object as a reference object candidate that matches the object to be inspected. Specifically, the identification ID of the reference object that is a candidate is associated with the capturing location. This processing will be described in detail later. Then, the CPU 31 proceeds to the next step S115.

In step S115, the CPU 31 determines whether there is a reference object specified to match at all capturing locations. When it is determined that there is a matching reference object (step S115: YES), the CPU 31 proceeds to the next step S116. When it is determined that there is no identification information candidate (step S115: NO), the CPU 31 proceeds to step S118.

In step S116, the CPU 31 executes final determination processing. In the final determination, for example, it is determined whether the matching reference object is specified for each capturing location of the object to be inspected, in other words, whether the collation with all of the reference objects is successful. This processing will be described in detail later. Then, the CPU 31 proceeds to the next step S117.

In step S117, the CPU 31 presents, as a determination result, for example, the identification ID of the reference object determined to match the whole object to be inspected and the number of successful collations for each capturing location to the user. Then, the CPU 31 returns to the processing shown in Fig. 7.

In step S118, the CPU 31 finally determines that the collation fails. Then, the CPU 31 proceeds to the next step S117. In this case, in step S117, the user is notified of the result of the collation failure, and the CPU 31 returns to the processing shown in Fig. 7.

Next, processing for selecting a matching reference object (identification ID) candidate for each capturing location in step S114 of Fig. 8 will be described with reference to Fig. 9.

In step S151, the CPU 31 proceeds to the next step S152 and repeats the processing from step S151 to step S155 as long as there is an unprocessed capturing location ID. For example, a capturing location ID is given to each capturing location, and processing is executed for each capturing location in order of the capturing location ID.

In step S152, the CPU 31 sums up and compares scores of the registration positions included in the capturing location to be processed for each matching reference object (identification ID). Then, the CPU 31 proceeds to the next step S153.

In step S153, the CPU 31 determines whether there are plural reference objects (identification IDs) having the highest total score at the same rate among the matching reference objects (identification IDs) in the same capturing location being processed.

In the present specification, a fact that there are plural reference objects (identification IDs) having the same highest total score among the reference objects (identification IDs) matching the object to be inspected at the same capturing location is also referred to as presence of highest score at the same rate. When the CPU 31 determines that there is the highest score at the same rate of the capturing location ID (step S153: YES), the CPU 31 proceeds to the next step S156. When the CPU 31 determines that there is no highest score at the same rate of the capturing location ID (step S153: NO), the CPU 31 proceeds to step S154.

In step S154, the CPU 31 associates identification ID of a reference object having the highest score described above with the capturing location being processed, and selects the identification ID as a reference object candidate that matched the object to be inspected. Then, the CPU 31 proceeds to the next step S155.

In step S155, the CPU 31 returns to step S151 and repeats the processing from step S151 to step S155 as long as there is an unprocessed capturing location. When there is no unprocessed capturing location, the processing ends and returns to the processing of Fig. 8.

In step S156, the CPU 31 determines whether priority can be given to a registration position according to a priority specification.

Here, the priority specification is, for example, a specification that defines which registration position is given priority among registration positions in a capturing location being processed. A specific example will be described using the example shown in Fig. 3. It is assumed that, among the registration positions 141, 142, and 143 in the lid 120 that is a capturing location, the priority of the registration position 142 is defined to be high and the priority of the registration positions 141 and 143 is defined to be low. Here, when the score of the registration position 141 and the score of the registration position 142 are the same and are the highest, the CPU 31 determines that the reference object (identification ID) that matches the registration position 142 is given priority according to the priority specification, that is, the registration position 142 can be given priority.

When plural registration positions are provided as described above and plural reference objects that match in the registration positions are selected, a most matching reference object by majority decision may be prioritized. Further, it may be determined which capturing location is prioritized among capturing locations instead of among registration positions. In this case, when the matching reference object is different for each capturing location, the reference object that matches the capturing location having a high priority is given priority.

In step S156, the CPU 31 proceeds to step S154 when it is determined that the priority according to the priority specification can be given (step S156: YES), and proceeds to step S157 when it is determined that the priority according to the priority specification cannot be given (step S156: NO). When the CPU 31 proceeds to step S154, the reference object that matches in the registration position having priority is selected as a reference object candidate that matches the object to be inspected.

In step S157, the CPU 31 determines that there is no matching reference object candidate from the capturing location ID being processed. Then, the CPU 31 proceeds to step S155.

Next, the processing for executing the final determination in step S116 of Fig. 8 will be described with reference to Fig. 10.

In step S171, the CPU 31 determines whether there is one reference object candidate selected in step S114 and the processing of Fig. 9. When the CPU 31 determines that the number of identification reference object candidates is not one (step S171: NO), the CPU 31 proceeds to step S172. When the CPU 31 determines that the number of reference object candidates is one (step S171: YES), the CPU 31 proceeds to step S178.

In step S172, the CPU 31 determines whether the current mode is a strict mode. When it is determined that the current mode is not a strict mode (step S172: NO), the CPU 31 proceeds to step S173. When it is determined that the current mode is a strict mode (step S172: YES), the CPU 31 proceeds to step S177.

The strict mode is, for example, a mode in which, when there are two or more reference object candidates, it is determined that the collation is blurred and it is strictly determined that the collation fails. The strict mode can be set in advance by a user or the like, or by an administrator or the like of the information processing device 30. When the strict mode is not set, the processing of step S172 and step S177 are omitted and the processing of step S173 is executed.

In step S173, the CPU 31 executes majority decision based on the reference object candidates. Then, the CPU 31 proceeds to the next step S174.

In step S174, the CPU 31 determines whether there are no candidates having the most votes at the same rate as a result of the majority decision of the reference object candidates. The CPU 31 proceeds to step S175 when there are no candidates having the most votes at the same rate (step S174: YES), and proceeds to step S176 when there are candidates having the most votes at the same rate (step S174: NO).

In step S175, the CPU 31 determines that the reference object having the most votes is the reference object that matches the object to be inspected, and finally determines that the collation is successful. Then, the CPU 31 returns to the processing of Fig. 8.

In step S176, the CPU 31 determines that the reference object candidate having a high score calculated in step S152 when the candidate is selected among the reference object candidates having the most votes is the reference object that matches the object to be inspected, and finally determines that the collation is successful. Then, the CPU 31 returns to the processing of Fig. 8.

In step S177, the CPU 31 finally determines that the collation fails. Then, the CPU 31 returns to the processing of Fig. 8.

In step S178, the CPU 31 determines that the reference object candidate selected in step S114 and the processing of Fig. 9 is a reference object that matches the object to be inspected, and finally determines that the collation is successful. Then, the CPU 31 returns to the processing of Fig. 8.

Next, what type of information is to be notified to the user when it is finally determined that the collation is successful in step S175, step S176, and step S178 will be described.

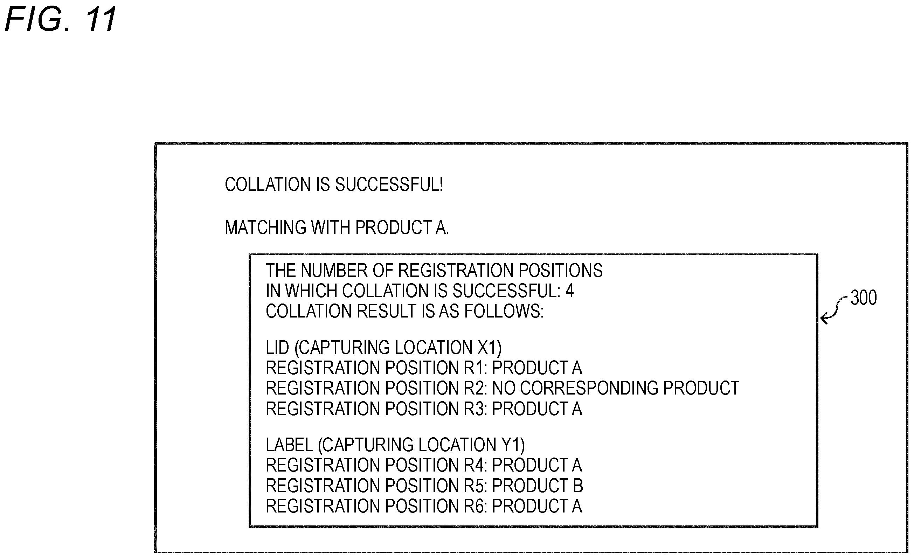

Fig. 11 is an example of a screen presented to the user when the collation is successful.

When it is determined in step S175 that the reference object candidate having the most votes is the reference object that matches the object to be inspected, for example, a screen as shown in Fig. 11 is presented to the user. A detail display unit 300 is provided on the screen. The detail display unit 300 shows the number of registration positions in which the collation is successful among the registration positions. In addition, below the number of registration positions for which the collation is successful, it is shown which reference object is determined to match in the registration positions. In the example shown in Fig. 11, it can be seen that registration positions other than registration positions R2 and R5 among registration positions R1 to R6 are determined to match those of the product A and the number of matching positions is four.

In this way, even when the registration position R2 is determined to have no corresponding product, the number of successful collations and identification information (name or identification ID of the reference object) on the reference objects that match the object to be inspected in the registration positions in which the collation is successful can be presented as information for confirming the authenticity of the object to be inspected. As a result, it is possible to provide an information processing device having high practicality as compared with a case where collation fails immediately when there is an abnormal value such as "no corresponding product" for the registration position R2.

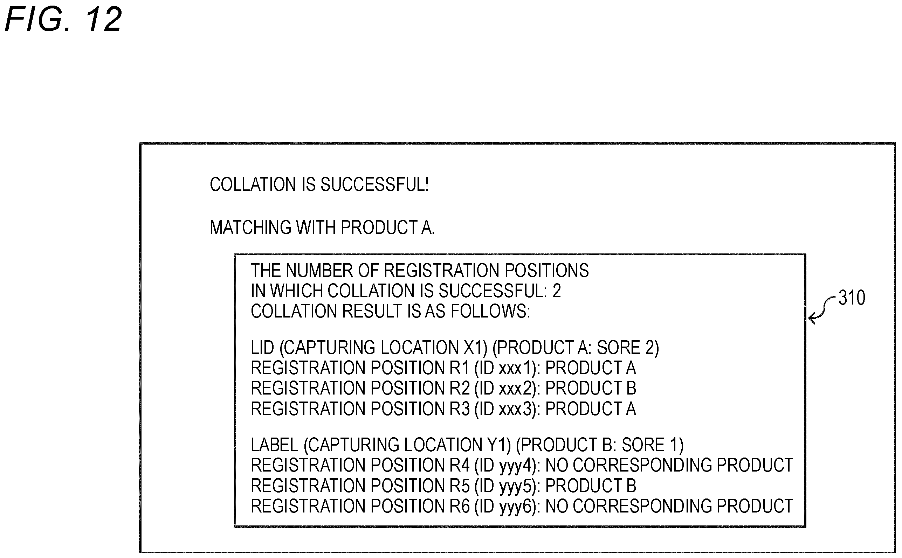

Fig. 12 is another example of the screen presented to the user when the collation is successful.

When it is determined in step S176 that the reference object candidate having a high score among reference object candidates having most votes at the same maximum rate is the reference object that matches the object to be inspected, for example, a screen as shown in Fig. 12 is presented to the user. A detail display unit 310 is provided on the screen. The detail display unit 310 presents information similar to the detail display unit 300 of Fig. 11, and further presents a score indicating the degree of matching with the reference object for each capturing location. For example, in the lid having the capturing location ID of X1, the registration positions R1 and R3 are collated to match the product A, and thus it is shown that the score two is given as the product A. Further, in the label having the capturing location ID of Y1, collation with the product B matches in the registration position R5 and there is no matching with the other products having a high score, and thus it is shown that the score one is given as the product B. As a result of the comparison of these scores, it is displayed on the screen that the product A having a high score matches.

In this way, the reference object and the capturing location at which matching is determined and points of the score at that time are shown together with the reference object determined to match the whole object to be inspected. Accordingly, bases for the matching reference object are clear.

In the example shown in Fig. 12, by presenting a score as an index indicating the degree of matching with the reference object, the user can infer the certainty of the collation result of the identification information, and the comprehensive individual identification can be executed more stably.

Further, in the present exemplary embodiment, as described above, the product A that is the reference object having the score two is displayed on an upper side and the product B having the score one is displayed below the product A. When presenting plural registration positions that match the registration position of the reference object and plural reference objects having the matching positions, the reference objects (the product A, the product B) are presented in order of the magnitude of numerical values of the score as the index indicating the degree of matching described above. In this way, when plural matching reference objects are presented, the user can know the order of the certainty of the identification information by presenting the reference objects arranged in order of the magnitude of the index indicating the degree of matching.

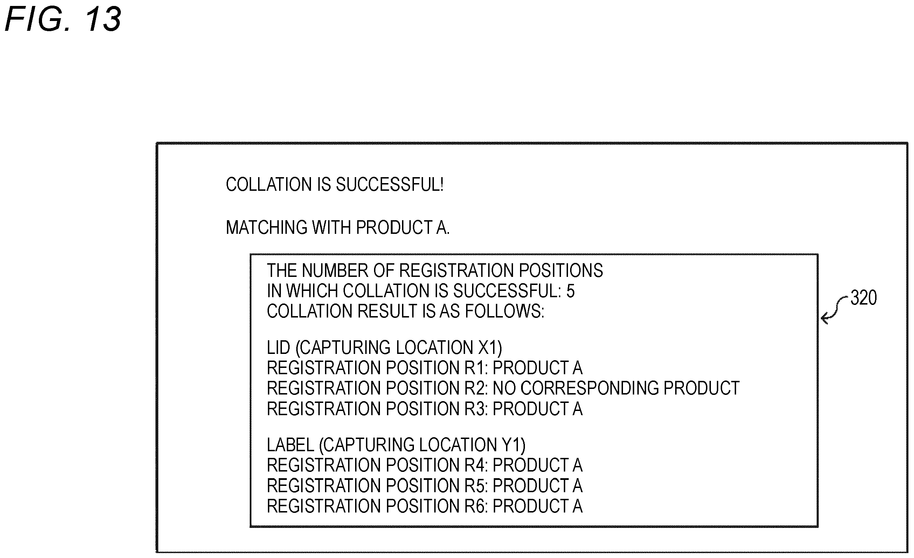

Fig. 13 is still another example of the screen presented to the user when the collation is successful.

In step S178 described above, when the selected one reference object candidate is determined as the matching reference object and it is finally determined that the collation is successful, for example, a screen as shown in Fig. 13 is presented to the user. A detail display unit 320 is provided on the screen. The detail display unit 320 shows the number of registration positions in which the collation is successful among the registration positions. In addition, below the number of registration positions for which the collation is successful, it is shown which reference object is determined to match in the registration positions. In the example shown in Fig. 13, it can be seen that registration positions other than the registration positions R2 among the registration positions R1 to R6 are determined to match the product A and the number of matching positions is five.

Next, other variations will be described.

As a variation of image capturing, in the present exemplary embodiment, plural (three) registration positions are cut out from one captured image to improve the accuracy of collation. Alternatively, the present disclosure is not particularly limited thereto. The number may be smaller than the above number and registration positions more than the above number may be cut out.

Further, in order to improve the accuracy of collation, an image may be captured plural times instead of once, and plural registration positions may be similarly cut out from the plural captured images. As a result, it is possible to reduce the influence of differences in capturing conditions.

Further, images of different surfaces may be registered as objects having a common identification ID. Specifically, for example, in the present exemplary embodiment, images of the surface of the lid 120 and the surface of the label 130 in the bottle 110 are registered. Alternatively, an image of a bottom surface of the bottle 110 that is a different surface may also be registered.

As a variation of the registration of the reference object, instead of capturing an image only once and registering the one captured image, capturing may be executed plural times and only one optimum captured image may be selected, and plural registration positions may be cut out and registered.

Further, when cutting out the registration positions, an image having poor image quality may not be registered among images of the cutout registration positions.

Although the above contents are variations of the registration, similar variations may also be obtained in the collation.

For example, one optimum captured image may be selected, and plural registration positions may be cut out from the one captured image and be collated. Further, an image having poor image quality may not be collated among the cutout images.

As a variation of the notification of the collation result, the identification ID may be notified only when there is one identification ID determined to be true, and the collation may be determined as a failure when two or more identification IDs are true.

The present disclosure is not limited to the above-described exemplary embodiments and various modifications, changes and improvements can be made without departing from the scope of the present disclosure. For example, plural exemplary embodiments described above may be combined as appropriate.

In the present exemplary embodiment, an exemplary embodiment in which each processing is implemented by software is described as an example. Alternatively, processing equivalent to a flowchart of each processing may be implemented in, for example, an application specific integrated circuit (ASIC) and may be processed by hardware. In this case, the processing speed is increased as compared with a case where each processing is implemented by software.

In the exemplary embodiment described above, the information processing program is installed in a ROM or the like. Alternatively, the present disclosure is not limited thereto. The information processing program according to the present disclosure can also be provided in a form of being recorded in a computer-readable storage medium. For example, the information processing program according to the present disclosure may be provided in a form of being recorded on an optical disc such as a compact disc (CD)-ROM or a digital versatile disc (DVD)-ROM. The information processing program according to the present disclosure may be provided in a form of being recorded in a semiconductor memory such as a universal serial bus (USB) memory or a flash memory. Further, the information processing device 30 may acquire a program from an external device connected to a communication line through the communication line.

In the present exemplary embodiment, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the exemplary embodiment, the term "processor" is broad enough to encompass one processor or plural processors in collaboration which are located physically apart from each other but may work cooperatively. An order of operations of the processor is not limited to one described in the exemplary embodiment above, and may be changed.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention defined by the following claims and their equivalents.

### Reference Sign List

- 10: information processing system
- 20: user terminal device
- 30: information processing device
- 31: CPU
- 32: ROM
- 33: RAM
- 34: storage
- 35: input unit
- 36: display unit
- 37: communication I/F
- 100: user
- 110: bottle
- 120: lid
- 130: label
- 141, 142, 143: registration position
- 150: visual field range
- 160: registration position settable range
- 300, 310, 320: detail display unit

## Claims

1. An information processing device comprising:
a processor,
wherein the processor is configured to
collate images of a plurality of positions on a surface of an object to be inspected with images of a plurality of positions, which corresponds to the plurality of positions on the surface of the object to be inspected, on a surface of at least one reference object that is a reference, and
present a number of successful collations among the plurality of positions and identification information on the reference object that matches the object to be inspected in a position where the collation is successful.

2. The information processing device according to claim 1,
wherein the processor is configured to present, in addition to the identification information, an index indicating a degree of matching between the object to be inspected and the reference object.

3. The information processing device according to claim 2,
wherein the processor is configured to present the identification information arranged in order of magnitude of the index when a plurality of pieces of the identification information are presented.

4. The information processing device according to any one of claims 1 to 3,
wherein the plurality of positions are classified by locations of the object to be inspected, and
wherein the processor is configured to determine, using a threshold value set for each of the locations, success of collation with the reference object in a position classified into the each of the locations.

5. The information processing device according to any one of claims 1 to 3,
wherein the plurality of positions are classified by locations of the object to be inspected, and
wherein the processor is configured to determine, when two or more positions of the plurality of positions are classified into one location of the locations and the reference object that matches the object to be inspected is different in the two or more positions classified into the one location, the reference object that matches the object to be inspected at the one location by giving priority to one of the two or more positions.

6. The information processing device according to any one of claims 1 to 5,
wherein images of two or more positions of the plurality of positions on the surface of the reference object are arranged within a visual field range of a capturing unit when the reference object is captured, and
wherein the two or more positions are arranged in an area that is inside the visual field range and is narrower than the visual field range.

7. The information processing device according to claim 6,
wherein two positions farthest from each other among the two or more positions arranged in the narrower area are arranged along an outer edge of the narrower area with a center of the narrower area interposed between the two positions.

8. An information processing program that causes a computer to function as the information processing device according to any one of claims 1 to 7.

9. An information processing method comprising:
collating images of a plurality of positions on a surface of an object to be inspected with images of a plurality of positions, which corresponds to the plurality of positions on the surface of the object to be inspected, on a surface of at least one reference object that is a reference, and
presenting a number of successful collations among the plurality of positions and identification information on the reference object that matches the object to be inspected in a position where the collation is successful.
